# EUROPÄISCHE PATENTSCHRIFT

(11) **EP 2 108 852 B1**
(45) Veröffentlichungstag und Bekanntmachung des Hinweises auf die Patenterteilung: **02.01.2013**
(21) Anmeldenummer: 09005075.8
(22) Anmeldetag: 07.04.2009
(51) Int. Cl.: F16B 13/12, F16B 35/04

(54) **Schraube**
Screw
Vis

(30) Priorität: 08.04.2008 DE 102008018438
(43) Veröffentlichungstag der Anmeldung: 14.10.2009
(73) Patentinhaber: Adolf Würth GmbH & Co. KG, 74653 Künzelsau (DE); Würth International AG, 7000 Chur (CH)
(72) Erfinder: Wieland, Achim, 74211 Leingarten (DE)
(74) Vertreter: Patentanwälte Ruff, Wilhelm, Beier, Dauster & Partner

(56) Entgegenhaltungen:
- EP-A2- 1 895 173
- WO-A1-01/61198
- DE-A1- 10 011 565
- DE-A1- 19 505 311

## Beschreibung

Die Erfindung geht aus von einem aus Kunststoff bestehenden Spreizdübel mit einer zu seinem Aufspreizen dienenden Schraube. Solche Dübel sind bekannt. Sie enthalten eine Dübelhülse, die auf die unterschiedlichsten Arten ausgebildet sein kann und die durch das Einschrauben einer Schraube durch Verdrängen von Material aufgeweitet wird. Dabei schneidet sich die Schraube ihr Gewinde in dem Dübel selbst.

Bei metallischen Spreizdübeln ist es bekannt, dass eine ein Innengewinde aufweisende Spreizhülse mit einem Bolzen zusammenwirkt, der ein Gewinde mit einem Sägezahnprofil aufweist. Wenn das Material, in dem der Dübel eingesetzt ist, Risse bekommt, so dass die Bohrung sich geringfügig weitet, führt das Sägezahngewinde dazu, dass sich der Bolzen zwar axial geringfügig bewegt, dadurch aber die Hülse weiter aufspreizt. Aufgrund dieses Nachspreizverhaltens können solche Dübel auch in Untergründen eingesetzt werden, in denen Risse auftreten können (US 2685221).

Bei aus Kunststoff bestehenden Spreizdübeln, bei denen die Dübelhülse also zu Beginn des Befestigungsvorgangs kein Gewinde aufweist, ist eine solche Art des Gewindes ebenfalls bekannt, so dass auch hier ein Nachspreizverhalten auftritt (WO01/66962). Auch hier ist das Gewinde der Schraube sägezahnartig ausgebildet, wobei die in Einschraubrichtung hintere Flanke einen flachen Winkel von etwa 45° oder weniger zur Achsrichtung der Spreizschraube aufweist.

Bei einem weiteren Spreizdübel mit einer Kunststoffhülse weist die aus Metall bestehende Spreizschraube ein Sägezahngewinde mit einem flachen Winkel der Gewindeflanke von etwa 16° und einem steilen Winkel von 75 bis 80° auf (WO 01/61198 A1).

Bei einer nochmals weiteren Spreizdübel mit einer in eine Dübelhülse eingreifenden Spreizschraube enthält diese ein sägezahnförmiges Gewinde mit einem flachen Winkel von 7° bis 28° (DE 10011565 A1).

Es hat sich herausgestellt, dass eine Spreizschraube mit einem sägezahnartig ausgebildeten Gewinde, insbesondere dann, wenn Abschnitte unterschiedlichen Kerndurchmesser vorgesehen sind, sich nur mit hohen Kosten herstellen lässt.

Der Erfindung liegt die Aufgabe zu Grunde, eine Spreizschraube für einen aus Kunststoff bestehenden Spreizdübel zu schaffen, die sich mit geringen Kosten einfach herstellen lässt und die zusammen mit einem solchen Spreizdübel dennoch die Möglichkeit der Verwendung des Dübels in einer Zugzone erlaubt.

Zur Lösung dieser Aufgabe schlägt die Erfindung eine Schraube mit den im Anspruch 1 genannten Merkmalen vor. Die Erfindung schlägt ebenfalls die Verwendung einer solchen Schraube als Spreizschraube für einen aus Kunststoff bestehenden Spreizdübel und die Kombination aus der Schraube und dem Spreizdübel vor. Weiterbildungen der Erfindung sind Gegenstand von Unteransprüchen.

Bei Rahmendübeln, die ein Beispiel für Kunststoffdübel sind, haben die Schrauben typischerweise ein Gewinde mit einem Flankenwinkel von angenähert 60°. Die Erfindung schlägt stattdessen vor, einen Flankenwinkel anzuwenden, der größer als 90° ist. Es hat sich herausgestellt, dass ein Gewinde mit einem solchen Flankenwinkel sich mit geringerem Aufwand herstellen lässt, was dann zu einem geringeren Gestehungspreis der Schraube führt.

Diese Vereinfachung der Herstellung gilt insbesondere dann, wenn die Schraube abschnittsweise unterschiedliche Durchmesser aufweist.

In Weiterbildung der Erfindung ist insbesondere vorgesehen, dass jede der beiden Gewindeflanken mit der Achse der Schraube einen Winkel von 30° oder weniger einschließt. Dies führt dann zu einem Flankenwinkel von 120° oder mehr.

Während der Stand der Technik Gewindeprofile mit Sägezahnform verwendet, schlägt die Erfindung in Weiterbildung vor, dass das Gewinde der Spreizschraube ein symmetrisches Gewinde ist.

Die Erfindung schlägt vor, dass die Schraube einen von dem Schraubenkopf ausgehenden gewindefreien Schaftabschnitt aufweist. An dieser Stelle wird der Schraubenschaft am stärksten auf Scherung oder Knickung beansprucht.

In nochmaliger Weiterbildung der Erfindung kann vorgesehen sein, dass der Schaft mindestens zwei mit einem Gewinde versehene Abschnitte aufweist, wobei in beiden Abschnitten der Kerndurchmesser des Gewindes unterschiedlich ist, nämlich in dem näher zum Schraubenkopf gewandten Abschnitt größer als in dem weiter vom Schraubenkopf abgewandten Abschnitt.

Erfindungsgemäß kann vorgesehen sein, dass der Außendurchmesser des Gewindes in den unterschiedlichen Gewindeabschnitten gleich ist. Die Schraube greift zunächst mit dem vorderen Abschnitt in die Dübelhülse ein, wo also der Kerndurchmesser kleiner ist als in dem folgenden Abschnitt. Daher ist an dieser Stelle das Gewinde stärker ausgeformt. Dort, wo das stärker ausgeformte Gewinde der Schraube das Gegengewinde in der Dübelhülse schon geformt hat, greift dann das weniger stark ausgeformte Gewinde des folgenden Abschnitts ein.

Die Wirkungsweise der in einen aus Kunststoff bestehenden Spreizdübel eingeschraubten Schraube besteht darin, dass bei einem Riss im Untergrund, in dem der Dübel sitzt, die Dübelhülse sich geringfügig erweitert, ohne sich axial zu verschieben. Bei dieser geringfügigen radialen Erweiterung wird die Schraube ebenfalls um einen geringen Betrag nach außen gezogen, wobei sich diese axiale Bewegung durch die flachen Gewindeflanken in eine radiale Kraft nach außen umsetzt. Die Dübelhülse wird also nachgespreizt.

Dieser Nachspreizvorgang würde gestört, wenn sich die Schraube durch ein Zurückdrehen dem Nachspreizvorgang entziehen würde. Um dies auch in ungünstigsten Fällen mit Sicherheit auszuschließen, kann erfindungsgemäß in Weiterbildung vorgesehen sein, dass die Schraube eine Rückdrehsicherung aufweist, die zwischen ihr und der Dübelhülse wirksam wird. Beispielsweise kann die Rückdrehsicherung an der Unterseite des Schraubenkopfs ausgebildet sein und an der Stirnseite der Dübelhülse angreifen. Die Rückdrehsicherung kann ähnlich aufgebaut sein wie ein bei Schrauben üblicher Fräskopf, aber mit unterschiedlicher Orientierung. Es können auch einfache Fräsrippen an der Unterseite des Schraubenkopfs ausgebildet sein, die sich beim Festschrauben eingraben und dadurch eine Rückdrehsicherung bilden, die auch noch wirksam ist, wenn sich die Schraube geringfügig axial verschiebt.

Kunststoffdübel der hier betroffenen Art werden üblicherweise mithilfe von elektrischen oder in sonstiger Weise motorisch angetriebenen Schraubern eingeschraubt. Diese Schrauber arbeiten mit hohen Drehzahlen. Es besteht die Gefahr, dass am Ende des Einschraubvorgangs der Schrauber nicht gleich abgeschaltet wird, so dass die Schraube weiter gedreht wird, ohne dass ein Vorschub möglich ist. In diesem Fall kann die Dübelhülse beschädigt werden, so dass der Dübel nicht mehr ausreichend fest sitzt. Zwar merkt ein geübter Monteur, wenn der Dübel befestigt ist, aber hierzu ist eine gewisse Aufmerksamkeit erforderlich. Um auch bei weniger geübten Monteuren die Gefahr des Überdrehens mit Sicherheit auszuschließen, kann in Weiterbildung der Erfindung vorgesehen sein, dass die Schraube eine zum Angriff an dem Spreizdübel bestimmte Überdrehsicherung aufweist. Hierbei kann es sich beispielsweise um ein elastisch oder plastisch verformbares Element handeln, das dazu führt, dass kurz vor dem endgültigen Befestigungszustand eine langsamere Abbremsung der Drehbewegung durch einen allmählich zunehmenden Widerstand auftritt. Im einfachsten Fall kann an der Unterseite des Schraubenkopfs eine flache Scheibe aus Elastomer angebracht sein. Diese Scheibe wird dann, wenn sie kurz vor Ende des Einschraubvorgangs auf der äußeren Stirnseite der Dübelhülse zur Anlage kommt, beim weiteren Schrauben mehr und mehr komprimiert und erzeugt auf diese Weise eine steigende Bremskraft gegenüber der Schraubbewegung. Eine solche flache Scheibe aus Elastomer kann auch an der Oberseite des äußeren Endes des Dübels angebracht sein.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: die Seitenansicht einer Schraube nach der Erfindung;
- Figur 2: in vergrößertem Maßstab einen Ausschnitt aus der Schraube;
- Figur 3: in nochmals vergrößertem Maßstab einen Teilschnitt durch die Schraube nach der Erfindung;
- Figur 4: die Seitenansicht einer Dübelhülse;
- Figur 5: in vergrößertem Maßstab die Seitenansicht eines Schraubenkopfs mit einer Rückdrehsicherung;
- Figur 6: die Seitenansicht eines Schraubenkopfs mit einer Überdrehsicherung.

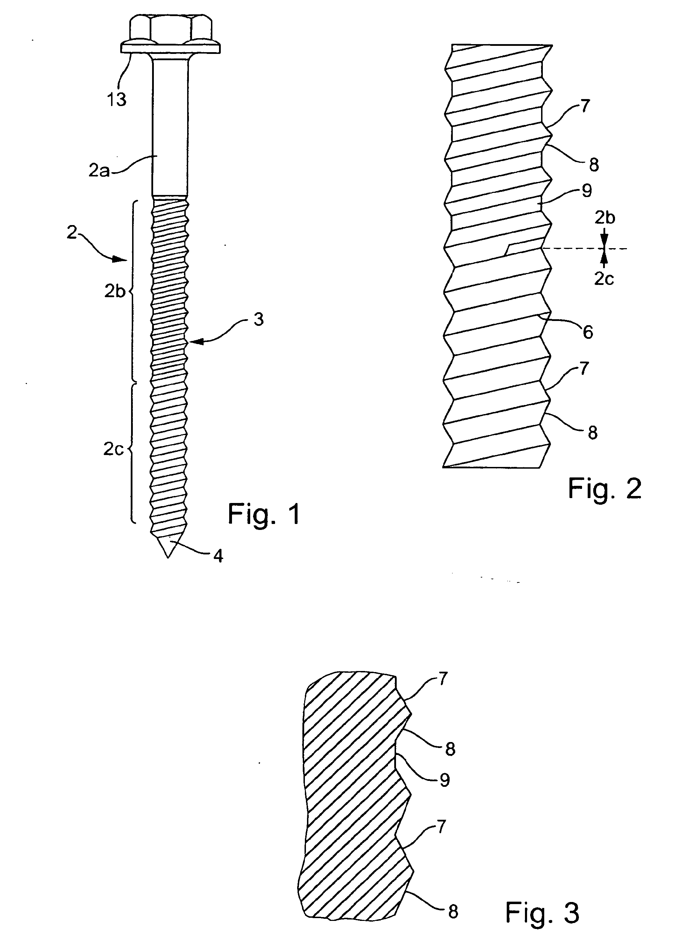

Die in Figur 1 dargestellte Schraube umfasst einen Schraubenkopf 1 in Form eines Sechskantkopfs mit einer ebenen Unterseite, einen Schraubenschaft 2 und ein auf den Schraubenschaft 2 aufgewalztes Gewinde 3. An dem dem Schraubenkopf 1 abgewandten Ende des Schraubenschafts 2 ist eine Schraubenspitze 4 gebildet. Zum Drehantrieb der Schraube dient im dargestellten Beispiel die sechskantige Form des Schraubenkopfs 1. Der Schraubenschaft 2 weist drei Abschnitte auf, nämlich einen sich unmittelbar an den Schraubenkopf 1 anschließenden ersten Abschnitt 2a, in dem der Schaft glatt, das heißt ohne Gewinde ausgebildet ist. An diesen ersten Abschnitt 2 a schließt sich ein zweiter Abschnitt 2 b an, wo der Schaft einen kleineren Kerndurchmesser aufweist als im Abschnitt 2 a. An diesen zweiten Abschnitt 2b schließt sich dann noch ein dritter Abschnitt 2c an, wo der Kerndurchmesser des Schafts nochmals geringfügig verkleinert ist.

Auf den zweiten und auf den dritten Abschnitt 2b, 2c ist das Gewinde 3 aufgewalzt, das über die gesamte Länge der Abschnitte 2b und 2c den gleichen Außendurchmesser und natürlich auch die gleiche Gewindesteigung aufweist. Einzelheiten der Form des Gewindes in diesen beiden Gewindeabschnitten gehen aus der vergrößerten Seitenansicht der Figur 2 hervor. Etwa in der Mitte der Längserstreckung des in Figur 2 dargestellten Ausschnittes aus der Schraube ist die Trennstelle zwischen den beiden Gewindeabschnitten 2b und 2c. Das Gewinde 3 bildet eine Gewindekante 6, die sich längs einer Schraubenlinie über die Länge der Gewindeabschnitte erstreckt. Die Gewindekante 6 wird von zwei Gewindeflanken 8, 7 gebildet. Die Gewindeflanke 8 ist auf der der Schraubenspitze 4 zugewandten Seite der Gewindekante 6 angeordnet, während die Gewindeflanke 7 dem Kopf 1 der Schraube zugewandt ist. Beide Gewindeflanken 7, 8 verlaufen unter einem Winkel von etwa 25° gegenüber der Längsachse der Schraube, so dass das Gewinde auf diese Weise in der Seitenansicht auch symmetrisch ist.

In den Gewindeabschnitt 2b, wo der Kerndurchmesser des Schafts 2 größer ist als im Abschnitt 2 c, ist das Gewinde 3 auf diese Weise weniger stark ausgeprägt, so dass zwischen den Gewindeflanken 8 und 7 der benachbarten Gewindewindungen ein in der Kontur geradliniger Gewindegrund 9 stehen bleibt. Dies kann man sowohl der Figur 2 als auch der Figur 3 entnehmen.

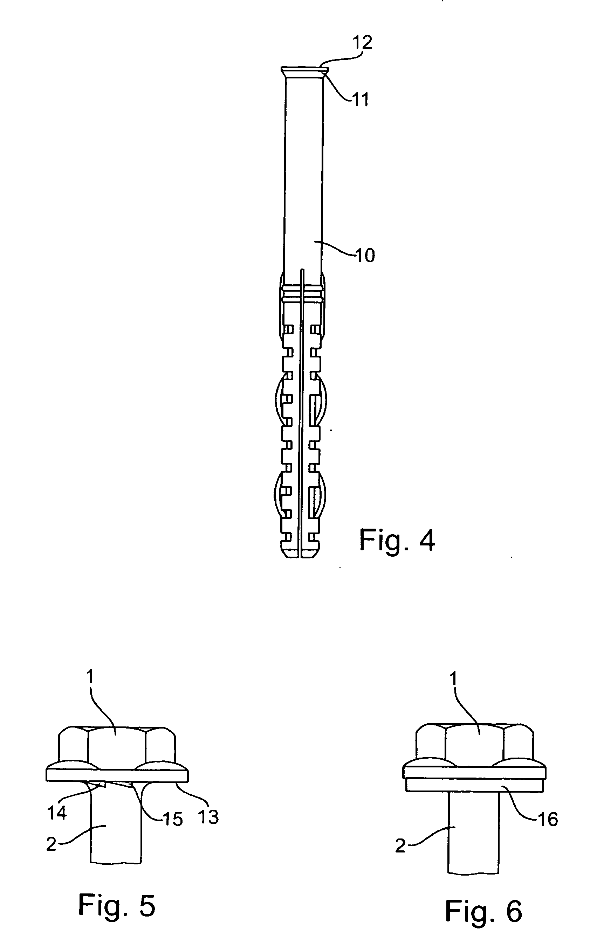

Wird eine solche Schraube in die in Figur 4 dargestellte Dübelhülse 10 eingeschraubt, so bildet sich das Gewinde 3 ein Gegengewinde in dem Inneren der Dübelhülse und beaufschlagt die Dübelhülse radial nach außen, da der Durchmesser des Schraubkanals innerhalb der Dübelhülse 10 deutlich kleiner ist als der Durchmesser der Schraube. Tritt nun im festgeschraubten Zustand ein Riss in dem Untergrund auf, was zu einer Erweiterung der Bohrung führt, so kann die Schraube unter Last geringfügig nach außen bewegt werden. Dabei spreizt die Gewindeflanke 7 längs des gesamten Gewindes 3 die Dübelhülse nach.

In Figur 4 ist zu sehen, dass die Dübelhülse 10 an ihrem äußeren Ende einen Kragen 11 aufweist, der eine ebene Stirnfläche 12 bildet. Bei diesem Dübel handelt es sich um einen für die Durchsteckmontage gedachten Dübel, der also durch eine Bohrung in dem zu befestigenden Gegenstand in das Dübelloch im Untergrund gesteckt wird. Im festgeschraubten Zustand liegt also die Unterseite des Schraubenkopfs 1 auf der Stirnseite 12 der Dübelhülse 10 auf. Damit auch im ungünstigsten Fall das erwähnte Nachspreizverhalten nicht durch ein Rückdrehen der Schraube aufgehoben wird, kann der Schraubenkopf 1 an seiner Unterseite eine Rückdrehsicherung aufweisen, die dieses Zurückdrehen verhindern soll. Hierzu wird auf Figur 5 verwiesen. An der Unterseite 13 des Schraubenkopfs 1, die mit der Stirnseite 12 der Dübelhülse 10 zusammenwirken soll, sind einzelne Zähne 14 ausgebildet, wobei im dargestellten Beispiel nur zwei Zähne gezeichnet sind. Diese Zähne weisen die Form von Sägezähnen auf, sind aber so orientiert, dass sie in Drehrichtung nur langsam ansteigen, während die stark abfallende rückwärtige Flanke 15 in umgekehrter Richtung wirksam ist. Dadurch wird das Einschrauben nur geringfügig behindert, ein Zurückdrehen aber stark. Die Tiefe der Zähne in Axialrichtung ist so gewählt, dass bei der möglichen Rückwärtsbewegung der Schraube die Zähne immer noch in Eingriff bleiben.

Um bei dem maschinellen Einschrauben der Schraube in die Dübelhülse gegen Ende des Befestigungsvorgangs beim unachtsamen Vorgehen kein Überdrehen des Einschraubvorgangs zuzulassen, kann in Weiterbildung an der Unterseite 13 des Schraubenkopfs ein Ring 16 beispielsweise aus Elastomermaterial angeordnet sein. Der Ring braucht nicht befestigt zu sein. Sobald die Unterseite 13 des Schraubenkopfs 1 den Ring 16 gegen die Stirnfläche 12 der Dübelhülse 10 anlegt, wird dieser Ring 16 allmählich komprimiert. Dadurch steigt der Widerstand, der sich dem Einschrauben entgegenstellt, über eine längere Strecke allmählich an, so dass der Monteur dies leichter und besser merken kann. Auf diese Weise wird ein Überdrehen und damit eine Beschädigung des von dem Gewinde in der Dübelhülse eingeformten Gegengewindes vermieden.

In dem beschriebenen Ausführungsbeispiel wird die Schraube durch Eindrehen in den Dübel befestigt. Alternativ kann eine Schraube auch in den gesetzten Dübel eingeschlagen werden, beispielsweise durch Schlagen mit einem Hammer auf den Schraubenkopf oder maschinell mithilfe eines Bohrhammers.

## Patentansprüche

1. Schraube für aus Kunststoff bestehende Spreizdübel, mit
1.einem Schraubenkopf (1) mit einer Drehantriebsausbildung,
1.2 einem Schraubenschaft (2),
1.3 einem sich über mindestens einen Teil des Schraubenschafts (2) erstreckenden Schraubengewinde (3),
1.4 dessen Gewindeflanken (7, 8) einen stumpfen Winkel miteinander einschließen, wobei
1.5 jede der beiden Gewindeflanken (7, 8) mit der Längsachse einen Flankenwinkel von weniger als etwa 30° einschließt.

2. Schraube nach Anspruch 1 oder 2, bei der das Gewinde (3) ein symmetrisches Gewinde ist.

3. Schraube nach einem der vorhergehenden Ansprüche, mit einem von dem Schraubenkopf (1) ausgehenden gewindefreien Schaftabschnitt (2 a).

4. Schraube nach einem der vorhergehenden Ansprüche, bei der der Schaft (2) mindestens zwei Gewindeabschnitte (2b, 2c) aufweist, wobei der den Kerndurchmesser des Gewindes (3) bildende Schaft in dem weiter vom Schraubenkopf (1) abgewandten Gewindeabschnitt (2c) einen kleineren Durchmesser aufweist als in dem anderen Abschnitt.

5. Schraube nach einem der vorhergehenden Ansprüche, bei der der Außendurchmesser des Gewindes (3) in beiden Gewindeabschnitten konstant ist.

6. Schraube nach einem der vorhergehenden Ansprüche, mit einer insbesondere zum Angriff an dem und zum Zusammenwirken mit dem Spreizdübel (10) bestimmten Rückdrehsicherung.

7. Schraube nach Anspruch 6, bei der die Rückdrehsicherung an einer Unterseite (13) des Schraubenkopfs (1) ausgebildet ist.

8. Schraube nach einem der vorhergehenden Ansprüche, mit einer insbesondere zum Angriff an dem und zum Zusammenwirken mit dem Spreizdübel (10) bestimmten Überdrehsicherung.

9. Schraube nach Anspruch 8, bei der die Überdrehsicherung an einer Unterseite (13) des Schraubenkopfs (1) ausgebildet ist.

10. Verwendung einer Schraube nach einem der vorhergehenden Ansprüche als Spreizschraube für einen aus Kunststoff bestehenden Spreizdübel.

11. Kombination aus Schraube nach einem der Ansprüche 1 bis 9 und einem aus Kunststoff bestehenden Spreizdübel.

## Claims

1. A screw for a plastic expansion anchor, featuring
1.1 a screw head (1) designed for being rotationally driven,
1.2 a screw shaft (2) and
1.3 a screw thread (3) that extends over at least part of the screw shaft (2) and
1.4 the thread flanks (7, 8) of which include an obtuse angle with one another, wherein
1.5 each of the two thread flanks (7, 8) includes a flank angle of less than approximately 30° with the longitudinal axis.

2. The screw according to Claim 1, wherein the thread (3) is a symmetric thread.

3. The screw according to one of the preceding claims with a threadless shaft section (2 a) that begins at the screw head (1).

4. The screw according to one of the preceding claims, in which the shaft (2) features at least two threaded sections (2b, 2c), wherein the shaft that forms the root diameter of the thread (3) has a smaller diameter in the threaded section (2c) that is situated farther from the screw head (1) than in the other section.

5. The screw according to one of the preceding claims, wherein the outside diameter of the thread (3) is constant in both threaded sections.

6. The screw according to one of the preceding claims with a reverse-lock safety that is designed, in particular, for engaging on and cooperating with the expansion anchor (10).

7. The screw according to Claim 6, wherein the reverse-lock safety is realized on an underside (13) of the screw head (1).

8. The screw according to one of the preceding claims with an overtightening safety that is designed, in particular, for engaging on and cooperating with the expansion anchor (10).

9. The screw according to Claim 8, wherein the overtightening safety is realized on an underside (13) of the screw head (1).

10. The utilization of a screw according to one of the preceding claims as an expansion screw for a plastic expansion anchor.

11. A combination of a screw according to one of Claims 1 to 9 and a plastic expansion anchor.

## Revendications

1. Vis pour piton à expansion en matière plastique, comportant
1.1 une tête de vis (1) en modèle commande rotative,
1.2 une tige de vis (2),
1.3 un filet (2) s'étendant sur au moins une partie de la tige de vis (3) et
1.4 dont les flancs filetés (7, 8) décrivent entre eux un autre obtus,
1.5 chacun des flancs filetés (7, 8) décrivant avec l'axe longitudinal un angle de flanc de moins d'environ 30°.

2. Vis selon la revendication 1, dans laquelle le filet (3) est un filet symétrique.

3. Vis selon une des revendications précédentes, comportant une section de tige (2a) sans filet partant de la tête de vis (1).

4. Vis selon une des revendications précédentes, dans laquelle la tige (2) présente au moins deux sections filetées (2b, 2c), la tige formant le diamètre central du filet (3) présentant dans la section filetée (2c) plus détournée de la tête de vis (1) un diamètre inférieur à celui de l'autre section.

5. Vis selon une des revendications précédentes, dans laquelle le diamètre extérieur du filet (3) est constant dans les deux sections filetées.

6. Vis selon une des revendications précédentes, comportant une sécurité anti-retour en arrière en particulier destinée à s'engrener sur le piton d'expansion (10) et à coopérer avec ce dernier.

7. Vis selon la revendication 6, dans laquelle la sécurité anti-retour est réalisée sur une face inférieure (13) de la tête de vis (1).

8. Vis selon une des revendications précédentes, comportant une sécurité anti-arrachement des filets en particulier destinée à s'engrener sur le piton d'expansion (10) et à coopérer avec ce dernier.

9. Vis selon la revendication 8, dans laquelle la sécurité anti- arrachement des filets est réalisée sur une face inférieure (13) de la tête de vis (1).

10. Utilisation d'une vis selon une des revendications précédentes comme vis à expansion pour un piton à expansion composé de matière plastique.

11. Combinaison d'une vis selon une des revendications 1 à 9 et d'un piton à expansion composé de matière plastique.
